# EUROPÄISCHE PATENTSCHRIFT

(11) **EP 0 483 388 B1**
(45) Veröffentlichungstag und Bekanntmachung des Hinweises auf die Patenterteilung: **18.08.1993**
(21) Anmeldenummer: 90120141.8
(22) Anmeldetag: 20.10.1990
(51) Int. Cl.: G11C 13/06, G11B 7/00

(54) **Optischer Speicher mit wahlfreiem Zugriff**
Optical random access memory
Mémoire optique à accès aléatoire

(43) Veröffentlichungstag der Anmeldung: 06.05.1992
(73) Patentinhaber: IBM DEUTSCHLAND GMBH, D-70569 Stuttgart (DE)
(72) Erfinder: Urban, Norbert, Dipl.-Math., W-7046 Gäufelden-Nebringen (DE)
(74) Vertreter: Dreiss, Uwe, Prof. Dr. jur. Dipl.-Ing. M.Sc.

(56) Entgegenhaltungen:
- FR-A- 2 293 035
- US-A- 3 582 183
- US-A- 3 721 965

## Beschreibung

Die Erfindung betrifft einen optischen Speicher mit wahlfreiem Zugriff, mit einem optischen Speichermedium, das eine Vielzahl von in Matrixform angeordneten Speicherfeldern aufweist, wobei jedes Speicherfeld dieser Speicherfeld-Matrix eine Speicherstellen-Matrix enthält, die aus einer Anzahl von in Matrixform angeordneten Speicherstellen besteht, und mit einer X/Y-Ablenkeinrichtung zur wahlfreien Adressierung einer Speicherstelle eines Speicherfeldes der Speicherfeld-Matrix, welche mit einem X-Steuersignal und mit einem Y-Steuersignal angesteuert wird, so daß ein auf die X/Y-Ablenkeinrichtung auftreffender Lichtstrahl in Abhängigkeit von der durch die beiden Steuersignale bewirkten Positionierung der X/Y-Ablenkeinrichtung wahlfrei auf eine dieser Positionierung korrespondierende Speicherstelle eines Speicherfeldes des optischen Speichermediums geleitet wird.

Ein derartiger optischer Speicher ist aus der US-PS 3,996,570 bekannt. Ein auf den ersten Blick ersichtlicher Nachteil des bekannten optischen Speichers besteht darin, daß zum Lesen und zum Schreiben von Daten auf das Speichermedium zwei separate optische Vorrichtungen erforderlich sind. Die Verwendung einer optischen Lese-Vorrichtung und einer hinsichtlich ihres Aufbaus sowie ihrer Funktion von der optischen Lese-Vorrichtung getrennten optischen Schreib-Vorrichtung bedingt nachteiligerweise einen aufwendigen Aufbau des optischen Speichers.

Die zum Schreiben von Daten auf das optische Speichermedium dienende Schreib-Vorrichtung weist einen als Lichtquelle fungierenden Laser auf, der einen räumlich kohärenten und kollimierten Laserstrahl aussendet. nach dem Durchlaufen eines elektrooptischen Modulators wird der Laserstrahl der zur wahlfreien Adressierung der einzelnen Speicherstellen des Speichermediums dienenden, zweistufigen X/Y-Ablenkeinrichtung zugeführt: Eine Speicherfeld-Ablenkeinrichtung der X/Y-Ablenkeinrichtung bewirkt eine Auswahl eines Speicherfeldes aus der Vielzahl der auf dem Speichermedium in Matrixform angeordneten Speicherfelder. Eine der Speicherfeld-Ablenkeinrichtung vorgeschaltete akusto-optische Speicherstelle-Ablenkeinrichtung der X/Y-Ablenkeinrichtung dient zur wahlfreien Adressierung einer bestimmten Speicherstelle des durch die Speicherfeld-Ablenkeinrichtung bestimmten Speicherfeldes. nach dem Durchlaufen dieser zweistufigen X/Y-Ablenkeinrichtung wird der abgelenkte Laserstrahl zu einem halbdurchlässigen Spiegel geführt und dort reflektiert. Der reflektierte Lichtstrahl wird über eine der Fokussierung des Laserstrahls dienende Matrix-Linsenanordnung zum Speichermedium geführt. Die Einwirkung des Laserstrahls auf eine ausgewählte Speicherstelle eines Speicherfeldes bewirkt eine Änderung des physikalischen Zustands der jeweiligen Speicherstelle, welche beim Lesen von der Lese-Vorrichtung des optischen Speichers erfaßt werden kann.

Die optische Lese-Vorrichtung weist eine hinter dem Speichermedium angeordnete Matrix-Lichtdioden-Anordnung auf, bei der für jedes Speicherfeld des Speichermediums eine Lichtdiode vorgesehen ist. Die einzelnen Lichtdioden der Matrix-Lichtdioden-Anordnung werden von der Steuereinrichtung des optischen Speichers angesteuert, so daß eine wahlfreie Adressierung eines Speicherfeldes des Speichermediums erreicht wird. Das von einer Lichtdiode der Matrix-Lichtdioden-Anordnung emittierte Licht tritt durch das beleuchtete Speicherfeld des Speichermediums hindurch, wird von der vor dem Speichermedium angeordneten Matrix-Linsenanordnung fokussiert und wird durch den halbdurchlässigen Spiegel zu einem Linsensystem geführt. Dieses Linsensystem vergrößert das von der Lichtdiode der Matrix-Lichtdioden-Anordnung erzeugte Abbild des durchleuchteten Speicherfeldes des Speichermediums. Diese aufwendige Linsenanordnung ist erforderlich, um dann in einer Detektoranordnung der optischen Lese-Vorrichtung die einzelnen Speicherstellen des abgebildeten Speicherfeldes des Speichermediums erfassen zu können: Die Detektor-Anordnung weist eine Vielzahl von in Matrixform angeordneten Detektoren auf, deren Anzahl und Anordnung der Konfiguration der Speicherstellen eines der Speicherfelder entspricht. Dieser bekannte optische Speicher besitzt außer der nachteiligen Trennung des Schreib- und des Lese-Vorganges und den bereits o.g. Nachteilen noch eine Vielzahl von ungünstigen Eigenschaften, so daß der bekannte optische Speicher den bei modernen Datenverarbeitunganlagen auftretenden Anforderungen nicht genügt: Die Speicherfeld-Ablenkeinrichtung der optischen Schreib-Vorrichtung wird durch zwei mechanisch drehbare Spiegel gebildet, welche von Schrittmotoren verstellt werden. Eine derartige mechanische Positionierung der zur wahlfreien Speicherfeld-Ablenkung dienenden drehbaren Spiegel bringt in nachteiliger Art und Weise einen langsamen Zugriff auf ein bestimmtes Speicherfeld des Speichermediums mit sich.

Desweiteren ist eine zufriedenstellende Reproduzierbarkeit der Spiegeleinstellung nicht gegeben. Die mechanische Positionierung der drehbaren Spiegel der Speicherfeld-Ablenkeinrichtung bringt Positionierungstoleranzen mit sich, welche in negativer Art und Weise die Speicherstellen-Dichte des Speichermediums beeinflussen: Die einzelnen Speicherstellen des Speichermediums müssen räumlich derart weit getrennt angeordnet sein, daß der Laserstrahl unter Berücksichtigung der Positionierungstoleranzen stets innerhalb der von einer Speicherstelle auf dem Speichermedium eingenommenen Fläche verbleibt. Es ist also aufgrund der bei der mechanischen Strahlenpositionierung auftretenden Toleranzen nicht möglich, ein hochintegriertes Speichermedium zu verwenden, bei dem zwei benachbarte Speicherstellen räumlich dicht nebeneinanderliegend angeordnet sind: Die bei der bekannten X/Y-Ablenkeinrichtung des optischen Speichers auftretenden Positionierungfehler würden dann nämlich in einem fehlerhaften Speicherstellen-Zugriff resultieren, der zu Datenfehlern führt.

Außerdem besitzt der bekannte optische Speicher für Datenverarbeitungsanlagen den Nachteil, daß er nur ein bit-serielles Schreiben der abzuspeichernden Daten in die einzelnen Speicherstellen des Speichermediums erlaubt: Es ist in nachteiliger Art und Weise jeweils nur möglich, durch eine entsprechende Ansteuerung der Speicherstelle-Ablenkeinrichtung und/oder der Speicherfeld-Ablenkeinrichtung auf eine einzige Speicherstelle zuzugreifen. Ein derartiger zeitlich serieller Zugriff auf die Speicherstellen des Speichermediums ist den Anforderungen, welche die hohe Operationsgeschwindigkeit moderner Datenverarbeitungsanlagen an den mit ihnen zusammenwirkenden optischen Speicher stellt, nicht gewachsen.

Aus der US-PS 3,721,965 ist ein optischer Speicher bekannt, der einen Laser aufweist, der von einem Modulator in Abhängigkeit der auf das optische Speichermedium zu schreibenden binären Information moduliert wird: Soll eine binäre "1" in eine Speicherstelle des Speichermediums geschrieben werden, so wird der Laserstrahl auf maximale Leistung geschaltet. Soll jedoch eine binäre "0" auf das optische Speichermedium geschrieben werden, so wird der Laserstrahl auf minimale Leistung geregelt. Synchron zu der Modulation des Lasers wird der emittierte Laserstrahl in einer X/Y-Ablenkeinrichtung derart abgelenkt, daß ein sog. "Raster-Scan" erreicht wird. nach dem Durchlaufen der X/Y-Ablenkeinrichtung wird der Laserstrahl zu einem Strahlmultiplexer geleitet und darin in eine Vielzahl von Laserstrahlen aufgespaltet, wobei jeder einzelne Laserstrahl der derart erzeugten Laserstrahl-Vielfalt das Modulationsmuster des vom Laser emittierten Laserstrahls beibehält, so daß sämtliche Teilstrahlen dieser Laserstrahl-Vielfalt in nachteiliger Art und Weise dieselbe Information repräsentieren. Um zu verhindern, daß auf dem optischen Speichermedium die zu schreibende Information redundant aufgezeichnet wird, ist ein Strahlselektor vorgesehen, der nur einen einzigen Laserstrahl der Laserstrahl-Vielfalt passieren läßt. Dieser optische Speicher besitzt den Nachteil,daß in besonders nachteiliger Art und Weise nur ein bit-serielles, nicht aber ein bit-paralleles Einschreiben der abzuspeichernden binären Information auf das optische Speichermedium möglich ist. Denn die X/Y-Ablenkeinrichtung ermöglicht keine wahlfreie Positionierung des vom Laser emittierten Laserstrahls. Vielmehr ist vorgesehen, daß der emittierte und vom Strahlmultiplexer in eine Strahl-Vielfalt aufgespaltene Laserstrahl sequentiell die erste Zeile von Speicherstellen eines jeden Speicherfeldes, dann die zweite Zeile, etc. überstreicht, wobei der Strahlselektor nur zu dem Zeitpunkt und nur für den Teilstrahl auf durchlässig geschaltet wird, zu dem dieser genau die eine zu beaufschlagende Speicherstelle eines einzigen Speicherfeldes überstreicht. Auch dieser bekannte optische Speicher für Datenverarbeitungsanlagen besitzt den Nachteil, daß er aufgrund der einzig und allein möglichen bit-seriellen Arbeitsweise eine sehr hohe Zugriffszeit auf eine bestimmte Speicherstelle eines bestimmten Speicherfeldes aufweist. Auch dieser bekannte Speicher ist daher den Anforderungen, welche die hohe Operationsgeschwindigkeit moderner Datenverarbeitungsanlagen an den mit ihnen zusammenwirkenden optischen Speicher stellt, nicht gewachsen.

Außerdem besitzten die beiden vorstehend beschriebenen optischen Speicher den Nachteil, daß zur Winkelkorrelation zwischen Eingangs- und Ausgangsstrahl umfangreiche und komplizierte Einrichtungen erforderlich sind. So ist bei dem aus der US-PS 3,996,570 bekannten optischen Speicher mit wahlfreiem Zugriff zu diesem Zweck vorgesehen, daß der Laserstrahl nach dem Verlassen der X/Y-Ablenkeinrichtung - wie bereits beschrieben wurde - über einen halbdurchlässigen Spiegel und einer Sammellinse zu einer Matrix-Linsenanordnung geführt wird. Bei dem aus der US-PS 3,721,965 bekannten optischen Speicher mit sequentiellem Zugriff ist zur Winkelkorrelation zwischen Eingangs- und Ausgangsstrahl ebenfalls ein kompliziertes Linsen- und Spiegelsystem vorgesehen. Derartige Korrelationssysteme verteuern nicht nur nachteiligerweise die bekannten optischen Speicher. Vielmehr ist in besonders nachteiliger Art und Weise eine aufwendige Justage dieser optischen Systeme erforderlich, um die gewünschte Winkelkorrelation zu gewährleisten. Außerdem treten aufgrund der immer gegebenen Fertigungstoleranzen im Linsensystem nicht vorhersehbare Abweichungen der Lichtstrahlen von ihrem vorbestimmten Verlauf auf, welche sich in einer Positionierungsungenauigkeit manifestieren. Die bekannten optischen Speicher sind daher bei hochintegrierten Speichermedien, bei denen zwei benachbarte Speicherstellen räumlich dicht nebeneinanderliegend angeordnet sind, nicht mehr einsetzbar.

Zur Vermeidung dieser Nachteile stellt sich die Erfindung die Aufgabe, einen optischen Speicher mit wahlfreiem Zugriff der eingangs genannten Art derart weiterzubilden, daß ein besonders rascher Zugriff auf die Speicherstellen des Speichermediums ermöglicht wird, wobei gewährleistet sein soll, daß die erforderliche Winkelkorrelation zwischen Eingangs- und Ausgangsstrahl besonders einfach erreichbar ist.

Diese Aufgabe wird erfindungsgemäß dadurch gelöst, daß zwischen der Lichtquelle und der X/Y-Ablenkeinrichtung ein Strahlmultiplexer angeordnet ist, welcher einen auftreffenden Lichtstrahl in eine Anzahl von eine Lichtstrahl-Matrix bildende Lichtstrahlen derart auffächert, daß jeder Lichtstrahl der Lichtstrahl-Matrix einem Speicherfeld der Speicherfeld-Matrix des optischen Speichermediums zugeordnet ist, daß in Abhängigkeit von der Ansteuerung der X/Y-Ablenkeinrichtung durch das X- und das Y-Steuersignal jeder Lichtstrahl der Lichtstrahl-Matrix auf die dieser Ansteuerung korrespondierende Speicherstelle des ihm zugeordneten Speicherfeldes der Speicherfeld-Matrix auftrifft, so daß jeweils eine Speicherstelle aller Speicherfelder simultan durch den zugeordneten Lichtstrahl der Lichtstrahl-Matrix beaufschlagt wird.

Erfindungsgemäß ist also vorgesehen, daß der Strahlmultiplexer zwischen der Lichtquelle und der X/Y-Ablenkeinrichtung angeordnet ist. Diese Maßnahme bewirkt in besonders vorteilhafter Art und Weise, daß die bisher zur Winkelkorrelation zwischen Eingangs- und Ausgangsstrahl erforderlichen optischen Korrelationssysteme ersatzlos entfallen können. Außerdem besitzt ein derartig ausgeführter optischer Speicher den Vorteil, daß die Lichtstrahlen mit sehr hoher Genauigkeit auf dem optischen Speichermedium positioniert werden können, so daß der erfindungsgemäße optische Speicher auch bei höchstintegrierten Speichermedien mit dicht nebeneinanderliegenden Speicherstellen einsetzbar ist.

Die erfindungsgemäßen Maßnahmen bewirken außerdem in besonders vorteilhafter Art und Weise, daß ein bit-paralleler Zugriff auf mehrere Speicherstellen des Speichermediums ermöglicht wird. Die im erfindungsgemäßen Strahlmultiplexer des erfindungsgemäßen optischen Speichers mit wahlfreiem Zugriff vollzogene zweidimensionale Aufspaltung des von der Lichtquelle emittierten Lichtstrahls in die Lichtstrahlen der Lichtstrahl-Matrix bewirkt in besonders vorteilhafter Art und Weise, daß gleichzeitig je eine Speicherstelle eines jeden Speicherfeldes der Speicherfeld-Matrix des optischen Speichermediums von je einem Lichtstrahl beaufschlagt wird: Durch diesen bit-parallelen, simultan eine Vielzahl von Speicherstellen abtastenden Zugriff wird in besonders vorteilhafter Art und Weise eine äußerst hohe Operationsgeschwindigkeit des erfindungsgemäßen optischen Speichers erreicht. Außerdem besitzen die erfindungsgemäßen Maßnahmen den Vorteil, daß simultan je eine Speicherstelle eines jeden Speicherfeldes individuell beschrieben werden kann.

Der durch den erfindungsgemäßen Strahlmultiplexer des optischen Speichers bewirkte bit-parallele Zugriff auf je eine Speicherstelle eines jeden Speicherfelds der Speicherfeld-Matrix des optischen Speichermediums besitzt außerdem den Vorteil, daß bei dem bekannten optischen Speicher die zur Adressierung der einzelnen Speicherfelder des optischen Speichermediums erforderliche, einen langsamen und inexakten Zugriff mit sich bringende Speicherfeld-Ablenkeinrichtung ersatzlos entfallen kann: Es ist bei dem erfindungsgemäßen optischen Speicher nicht mehr notwendig, durch eine mechanische Positionierung der drehbaren Spiegel ein bestimmtes Speicherfeld der Speicherfeld-Matrix des optischen Speichermediums auszuwählen, da simultan allen Speicherfeldern des optischen Speichermediums je ein im Strahlmultiplexer erzeugter Lichtstrahl der Lichtstrahl-Matrix zugeordnet wird. Der erfindungsgemäße optische Speicher besitzt desweiteren den Vorteil, daß er für eine äußerst hohe Speicherstellen-Dichte ausgelegt werden kann, da eine in nachteiliger Art und Weise Positionierungsfehler mit sich bringende mechanische Positionierung der drehbaren Spiegel der bei dem bekannten optischen Speicher vorgesehenen Speicherfeld-Ablenkeinrichtung entfällt.

Eine vorteilhafte Weiterbildung der Erfindung sieht vor, daß der Strahlmultiplexer des erfindungsgemäßen optischen Speichers aus einem X-Strahlmultiplexer und aus einem dem X-Strahlmultiplexer im Strahlengang des Lichtstrahls nachgeschalteten Y-Strahlmultiplexer besteht. Der X-Strahlmultiplexer spaltet den von der Lichtquelle emittierten Lichtstrahl in eine Anzahl von parallelen Lichtstrahlen auf, die in einer X-Richtung aufgefächert sind. Die aus dem X-Strahlmultiplexer austretenden parallelen Lichtstrahlen treffen auf den Y-Strahlmultiplexer auf. Jeder einzelne dieser in X-Richtung aufgefächerten parallelen Lichtstrahlen wird dann im Y-Strahlmultiplexer in eine Anzahl von in einer Y-Richtung aufgefächerten parallelen Lichtstrahlen aufgespaltet. Die aus dem Y-Strahlmultiplexer austretenden, in der X- und der Y-Richtung aufgefächerten Lichtstrahlen bilden dann die Lichtstrahl-Matrix aus. Die erfindungsgemäßen Maßnahmen bewirken, daß in besonders einfacher Art und Weise ein simultaner, bit-paralleler Zugriff auf alle Speicherfelder der Speicherfeld-Matrix des Speichermediums ermöglicht wird.

Eine weitere vorteilhafte Weiterbildung der Erfindung sieht vor, daß der X-Strahlmultiplexer und/oder der Y-Strahlmultiplexer aus einer Anzahl von optisch doppelbrechenden Kristallen besteht. Die vorzugsweise aus Doppelspat bestehenden optisch doppelbrechenden Kristalle bilden in besonders einfacher Art und Weise einen Strahlmultiplexer zur zweidimensionalen Aufspaltung eines Lichtstrahls aus, welcher sich durch seinen besonders kostengünstigen Aufbau auszeichnet.

Eine weitere vorteilhafte Weiterbildung der Erfindung sieht vor, daß eine alternative Ausführung des Strahlmultiplexers durch den X-Strahlmultiplexer, durch ein an der Ausgangsseite des X-Strahlmultiplexers angeordnetes Umkehrprisma und durch drei an der Eingangsseite des X-Strahlmultiplexers angeordnete Spiegel gebildet wird. Die aus dem X-Strahlmultiplexer austretenden, in der X-Richtung aufgefächerten parallelen Lichtstrahlen werden durch das Umkehrprisma zum ersten Spiegel zurückgeführt. Die vom ersten Spiegel reflektierten parallelen Lichtstrahlen werden zu dem zweiten und zu dem dritten Spiegel geleitet. Diese sind derart angeordnet, daß die auf sie auftreffenden, in der X-Richtung aufgefächerten parallelen Lichtstrahlen in der Y-Richtung versetzt in den X-Strahlmultiplexer eintreten. Jeder dieser in Y-Richtung versetzten Lichtstrahlen wird im X-Strahlmultiplexer wiederum in der X-Richtung aufgefächert, so daß am Ausgang des Strahlmultiplexers die Lichtstrahl-Matrix austritt. Ein derartig aufgebauter Strahlmultiplexer zeichnet sich in besonders vorteilhafter Art und Weise durch einen einfachen und kompakten Aufbau aus, da das Umkehrprisma und die drei Spiegel den Y-Strahlmultiplexer ersetzen.

Eine weitere vorteilhafte Weiterbildung der Erfindung sieht vor, daß eine weitere alternative Ausführung des Strahlmultiplexers durch ein Glasfaserbündel gebildet wird, welches eine Vielzahl von Glasfasern aufweist. Der Strahlmultiplexer wird zwischen der Lichtquelle und der X/Y-Ablenkeinrichtung angeordnet und wandelt den am Eingang des Glasfaserbündels auftretenden, von der Lichtquelle emittierten Lichtstrahl in die Lichtstrahl-Matrix um, deren Lichtstrahlen dann zu den Verspiegelungen der X/Y-Ablenkeinrichtung geführt werden. Die hervorragende Eigenschaft eines derartigen Strahlmultiplexers besteht in seiner äußerst einfachen Realisierung, da nur konventionelle Glasfasern nötig sind.

Eine weitere vorteilhafte Weiterbildung der Erfindung sieht vor, daß die X/Y-Ablenkeinrichtung, welche von einer Steuereinrichtung des optischen Speichers mit einem X-Steuersignal und mit einem Y-Steuersignal angesteuert wird,des erfindungsgemäßen optischen Speichers durch zwei verspiegelte Piezokristalle gebildet wird. Die Verwendung von Piezokristallen zur wahlfreien Adressierung der Speicherstellen des optischen Speichermediums besitzt den Vorteil, daß eine äußerst schnelle Zugriffszeit erreicht wird. Die Piezokristalle werden infolge des reziproken piezoelektrischen Effekts, der durch die Spannnungsbeaufschlagung mittels der X- bzw. Y-Steuersignale auftritt, deformiert und folgen einer Änderung dieser Steuersignale nahezu ohne Verzögerung: Die Zugriffszeit wird im wesentlichen nur mehr durch die elektronische Signalverarbeitung in der Steuereinrichtung des optischen Speichers bestimmt. Eine derartige zweidimensionale Strahlablenkung mittels der piezoelektrischen Kristalle zeichnet sich außerdem durch eine äußerst hohe Reproduzierbarkeit der Ablenkwerte und durch eine äußerst hohe Ortsauflösung bei der Strahl-Positionierung auf dem optischen Speichermedium aus, so daß Speichermedien mit einer äußerst hohen Speicherstellen-Dichte verwendet werden können.

Weitere vorteilhafte Weiterbildungen der Erfindung ergeben sich aus den Unteransprüchen.

Weitere Einzelheiten der Erfindung sind den beiden Ausführungsbeispielen zu entnehmen, welche im folgenden anhand der Zeichnungen beschrieben werden. Es zeigen:
- Figur 1: ein erstes Ausführungsbeispiel,
- Figur 2: ein optisches Speichermedium,
- Figuren 3 und 3a: eine X/Y-Ablenkeinrichtung,
- Figuren 4a und 4b: einen Strahlmultiplexer,
- Figur 5a-5c: eine zweite Ausführungsform des Strahlmultiplexers,
- Figur 6: ein zweites Ausführungsbeispiel.

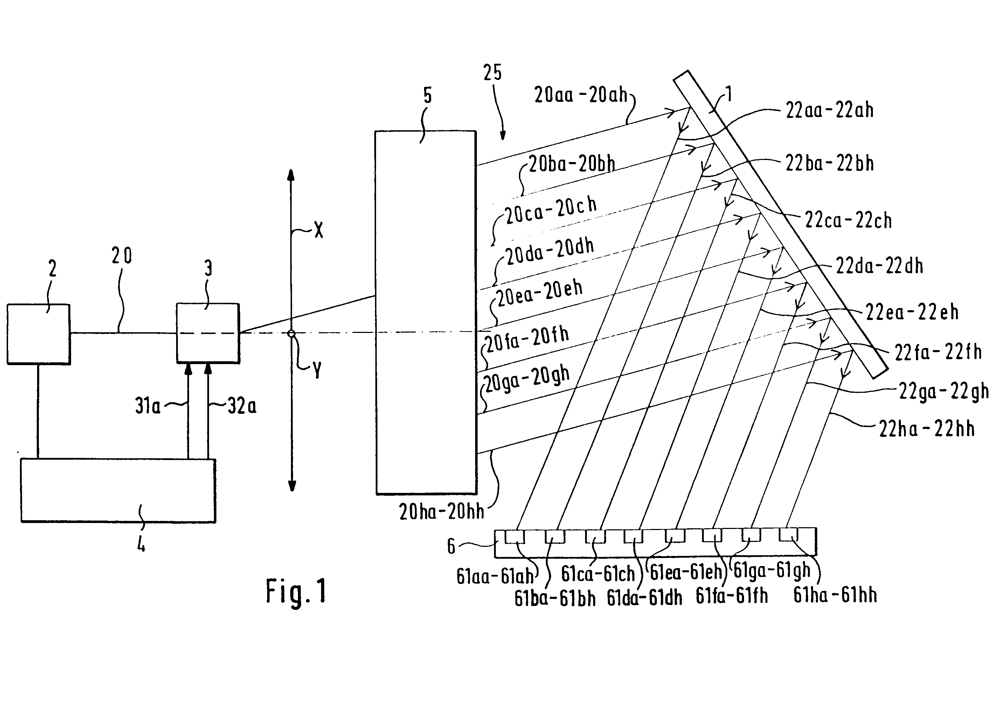

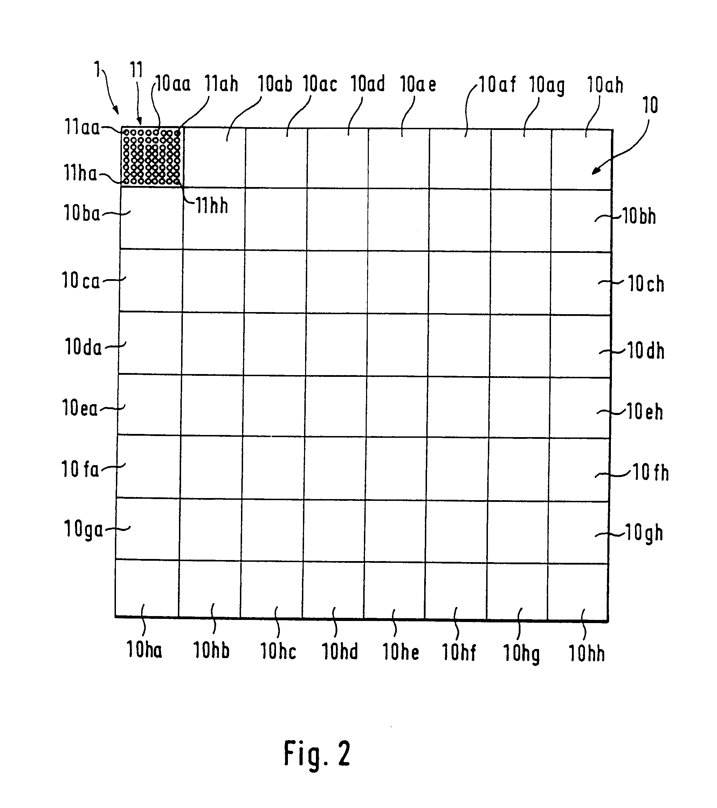

Das in Figur 1 dargestellte Ausführungsbeispiel eines optischen Speichers mit wahlfreiem Zugriff weist einen als Lichtquelle 2 dienenden Laser auf, welcher einen kollimierten und polarisierten Lichtstrahl 20 emittiert. Der Lichtstrahl 20 wird über eine X/Y-Ablenkeinrichtung 3 und über einen Strahlmultiplexer 5 zu einem optischen Speichermedium 1 geführt. Das in Figur 2 näher dargestellte optische Speichermedium 1 weist eine Vielzahl von in Matrixform angeordneten Speicherfeldern 10aa-10ah, 10ba-10bh, ..., 10ha-10hh auf. Jedes Speicherfeld einer derart gebildeten Speicherfeld-Matrix 10 des optischen Speichermediums 1 weist eine Vielzahl von in Matrixform angeordnete Speicherstellen 11aa-11hh auf. Bei der in Figur 2 dargestellten Ausführungsform des optischen Speichermediums 1 ist eine aus m=8 x n=8 Speicherfeldern bestehende Speicherfeld-Matrix 10 dargestellt, bei der jedes der m x n = 64 Speicherfelder 10aa-10hh aus k=8 x l=8 Speicherstellen 11aa-11hh besteht. Die hier verwendeten Werte für k,l,m,n besitzen nur beispielhaften Charakter und wurden der prägnanteren Beschreibung des Ausführungsbeispiels halber gewählt. Es ist aber nicht erforderlich, daß die Zahl m bzw. k der Reihen der Speicherfelder bzw. der Speicherstellen der Speicherfeld-Matrix 10 bzw. der Speicherstellen-Matrix 11 der Anzahl n bzw. l der Spalten derselben entspricht.

Die hier beschriebene Aufteilung des optischen Speichermediums 1 in eine Speicherfeld-Matrix 10 und in Speicherstellen-Matrizen 11 besitzt nur formalen Charakter, da - wie weiter unten noch erläutert wird - die Einteilung des optischen Speichermediums 1 im wesentlichen durch die nachfolgend beschriebenen Komponenten des optischen Speichers selbst erfolgt und nicht als extern vorgegebene Untergliederung aufzufassen ist.

Das Speichermedium 1 ist in bekannter Art und Weise als magnetooptisches Speichermedium ausgebildet, welches mit einer dünnen Schicht eines magnetischen Belages beschichtet ist. Die Einwirkung eines Lichtstrahles auf eine der Speicherstellen 11aa-11hh bewirkt, daß die magnetisierte Schicht des optischen Speichermediums 1 in diesem Bereich über den Curie-Punkt erhitzt wird, so daß die beaufschlagte magnetische Schicht der Speicherstelle des Speichermediums ihre ursprüngliche Magnetisierung verliert. Hinter jedem Speicherfeld 10aa-10hh des optischen Speichermediums 1 ist ein - nicht gezeigter - Elektromagnet angeordnet, der von einer Steuereinrichtung 4 des optischen Speichers angesteuert wird. Dieser Magnet erzeugt ein Magnetfeld, dessen Ausrichtung dem binären Zustand des in diese Speicherstelle abzuspeichernden binären Datenbits entspricht. Das vom Elektromagnet erzeugte äußere Magnetfeld zwingt die Atome der magnetisierten Schicht der erhitzten Speicherstelle des Speichermediums in eine definierte Richtung, welche nach dem Abkühlen der Speicherstelle erhalten bleibt. Zum Auslesen dieser Speicherstelle wird ein polarisierter Lichtstrahl verwendet, dessen Energie für eine Erwärmung der magnetisierten Schicht des optischen Speichermediums über den Curie-Punkt nicht ausreicht. Bei der Reflexion dieses Laserstrahls wird die Polarisationsrichtung des auftreffenden Lichtstrahls durch den magnetooptischen Kerr-Effekt gedreht. Diese Drehung der Polarisationsrichtung wird über einen Analysator in eine Schwankung der Lichtintensität umgesetzt, welche dann in einem Detektor erfaßt wird.

Wie wiederum aus Figur 1 ersichtlich ist, wird die Lichtquelle 2 von der Steuereinrichtung 4 des optischen Speichers derart gesteuert, daß die Pulsdauer und die Pulsamplitude des emittierten Lichtstrahls 20 den jeweils unterschiedlichen, o.g. Anforderungen hinsichtlich der Pulsleistung beim Schreib- und beim Lesevorgang entspricht.

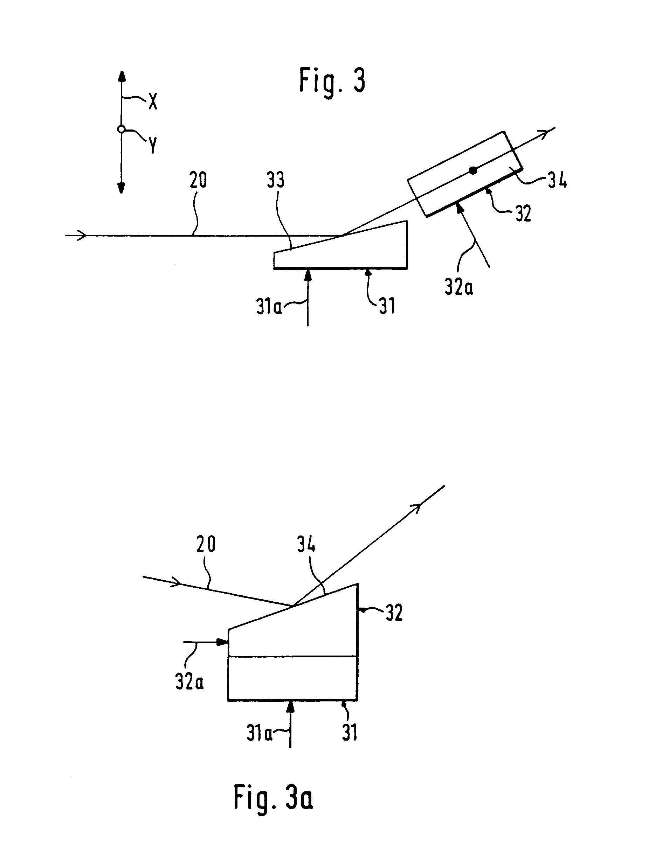

Der von der Lichtquelle 2 emittierte Lichtstrahl 20 wird zur X/Y-Ablenkeinrichtung 3 geführt, welche in Figur 3 dargestellt ist. Diese bewirkt eine zweidimensionale Ablenkung des Lichtstrahls 20 in eine X-Richtung und/oder in eine Y-Richtung (siehe auch Fig.1). In besonders vorteilhafter Art und Weise wird die zweidimensionale Ablenkung des Lichtstrahls 20 durch zwei verspiegelte Piezokristalle durchgeführt. Ein mit einer Verspiegelung 33 versehener erster Piezokristall 31 der X/Y-Ablenkeinrichtung 3 dient zur Ablenkung des Lichtstrahles 20 in der X-Richtung. Ein mit einer Verspiegelung 34 versehener zweiter Piezokristall 32 lenkt den von einer Verspiegelung 33 des ersten Piezokristalls 31 reflektierten Lichtstrahl 20 in die Y-Richtung ab. Der erste und der zweite Piezokristall 31 und 32 sind jeweils über eine erste und eine zweite Steuerleitung 31a und 32a mit der Steuereinrichtung 4 des optischen Speichers elektrisch leitend verbunden. Diese erzeugt - der gewünschten Ablenkung des Lichtstrahls 20 entsprechend - ein X-Steuersignal und ein Y-Steuersignal. Die Spannungsbeaufschlagung des ersten bzw. des zweiten Piezokristalls 31 bzw. 32 mit dem X-Steuersignal bzw. mit dem Y-Steuersignal bewirkt infolge des hierbei auftretenden reziproken piezoelektrischen Effekts eine Deformation des entsprechenden Piezokristalls 31 bzw. 32. Eine diskrete Änderung des X/Y-Steuersignals resultiert in definierter Art und Weise in einer bestimmten Lageänderung der Verspiegelung 33 bzw. 34 des ersten bzw. zweiten Piezokristalls 31 bzw. 32, welche eine Änderung des Einfallswinkels des von der Lichtquelle 2 emittierten Lichtstrahls 20 bewirkt. Durch eine entsprechende Ansteuerung des ersten und/oder des zweiten Piezokristalls 31,32 mit dem von der Steuereinrichtung 4 des optischen Speichers erzeugten X- und Y-Steuersignal wird in besonders einfacher Art und Weise eine wahlfreie Adressierung einer Speicherstelle 11aa-11hh der Speicherstellen-Matrix 11 erreicht.

Die Dimensionen k und l der Speicherstellen-Matrix 11 werden wesentlich dadurch festgelegt, wieviele diskrete, reproduzierbare Spannungswerte innerhalb eines Gesamtspannungsbereichs erzeugt werden können: Die Anzahl k der Speicherstellen 11aa-11ah einer Reihe bzw. die Anzahl l der Speicherstellen 11aa-11ha einer Spalte eines Speicherfeldes 11 der Speicherfeld-Matrix 10 wird im wesentlichen durch die Anzahl dieser diskreten Spannungswerte des X- bzw. Y-Steuersignals bestimmt, die in einer definierten und diskriminierbaren Auslenkung des ersten bzw. des zweiten Piezokristalls 31 bzw. 32 der X/Y-Ablenkeinrichtung 3 resultieren. Die aus der unterschiedlichen Spannungsbeaufschlagung mit zwei benachbarten diskreten Spannungswerten des X- bzw. Y-Steuersignals resultierende Lageänderung des Lichtstrahl-Auftreffpunkts auf dem optischen Speichermedium 1 muß geringfügig größer sein als die Ausdehnung einer Speicherstelle auf dem Speichermedium 1, wobei diese Ausdehnung im wesentlichen durch den Strahldurchmesser des auf das optische Speichermedium 1 auftreffenden Lichtstrahls bestimmt wird. Die Verwendung von verspiegelten Piezokristallen 31,32 zur zweidimensionalen Strahlablenkung besitzt außerdem den Vorteil, daß in besonders vorteilhafter Art und Weise eine äußerst schnelle Zugriffszeit auf die einzelnen Speicherstellen des optischen Speichermediums 1 erreicht wird: Der erste Piezokristall 31 bzw. der zweite Piezokristall 32 folgen einer Änderung des X-Steuersignals bzw. des Y-Steuersignals ohne Verzögerung, so daß die Zugriffszeit im wesentlichen nur mehr durch die elektronische Signalverarbeitung in der Steuereinrichtung 4 - für die X/Y-Ablenkung im wesentlichen eine Digital-/Analog-Wandlung - des optischen Speichers bestimmt wird. Ein weiterer Vorteil der zweidimensionalen Strahlablenkung mittels Piezokristallen besteht darin, daß eine äußerst hohe Reproduzierbarkeit der Ablenkung gegeben ist. Dies erlaubt in Verbindung mit der durch die Piezokristalle erreichbaren äußerst hohen Ortsauflösung bei der Strahl-Positionierung auf dem optischen Speichermedium 1 einen Einsatz des beschriebenen Speichers auch bei Speichermedien, welche sich durch eine äußerst hohe Speicherstellen-Dichte auszeichnen.

Eine alternative Ausführung der X/Y-Ablenkeinrichtung 3 des optischen Speichermediums ist in der Figur 3a dargestellt. Diese unterscheidet sich von der oben beschriebenen X/Y-Ablenkeinrichtung dadurch, daß der erste Piezokristall 31 und der zweite Piezokristall 32 starr miteinander verbunden angeordnet sind. Die Funktionsweise dieser aus den starr miteinander verbundenen Piezokristallen 31 und 32 bestehenden X/Y-Ablenkeinrichtung ist dem Fachmann aus obiger Beschreibung klar ersichtlich, so daß sich weitere Ausführungen hierzu an dieser Stelle erübrigen.

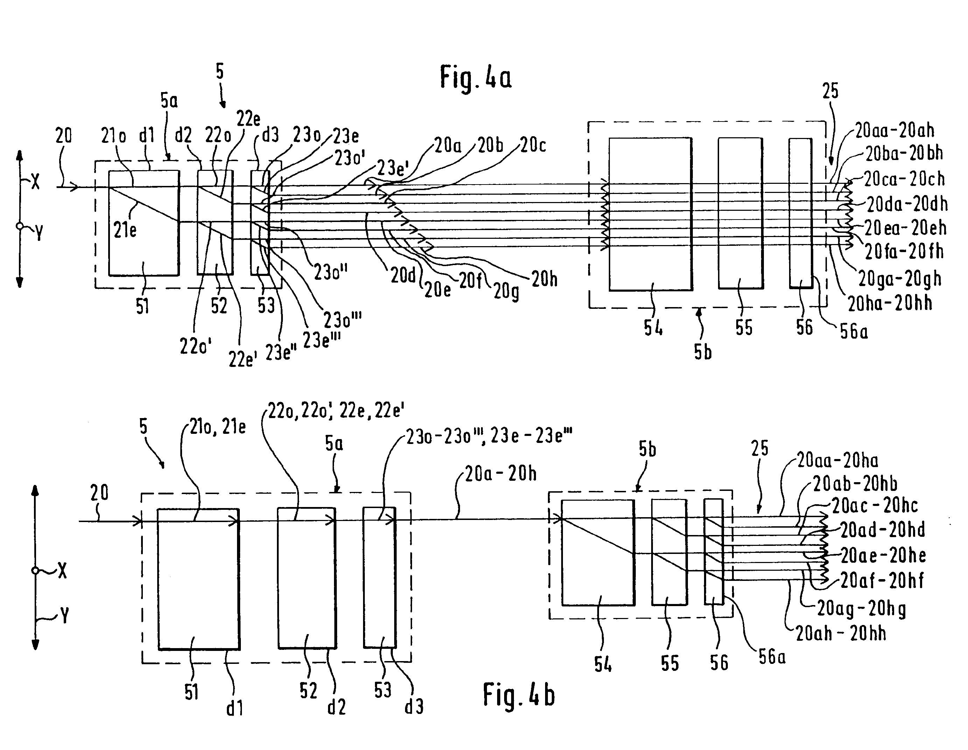

Der in der X/Y-Ablenkeinrichtung 3 zweidimensional abgelenkte Lichtstrahl 20 wird zu einem Strahlmultiplexer 5 geführt, in dem dieser in eine Vielzahl von parallelen Lichtstrahlen aufgespaltet wird. Der in der Figur 4 dargestellte Strahlmultiplexer 5 gliedert sich im wesentlichen in einen X-Strahlmultiplexer 5a und in einen Y-Strahlmultiplexer 5b. Der X-Strahlmultiplexer 5a weist einen ersten, einen zweiten und einen dritten optisch doppelbrechenden Kristall 51,52 und 53 auf, in denen der auf den X-Strahlmultiplexer 5a auftreffende Lichtstrahl 20 in der X-Richtung aufgefächert wird. In analoger Weise wird der Y-Strahlmultiplexer 5b durch einen vierten, einen fünften und einen sechsten optisch doppelbrechenden Kristall 54,55 und 56 gebildet, in denen die aus dem X-Strahlmultiplexer austretenden, bereits in der X-Richtung aufgefächerten Lichtstrahlen in der Y-Richtung aufgefächert werden. Die optisch doppelbrechenden Kristalle 51-56 des Strahlmultiplexers 5 bestehen vorteilhafterweise aus Doppelspat, welcher sich durch seine besonders günstigen Doppelbrechungs-Eigenschaften auszeichnet. Die in den Kristallen 51-53 stattfindende optische Doppelbrechung bewirkt, daß der auf den Strahlmultiplexer 5 einfallende Lichtstrahl 20 im ersten optisch doppelbrechenden Kristall 51 in zwei getrennte Strahlen, nämlich in einen ersten ordentlichen Lichtstrahl 21o und in einen ersten außerordentlichen Lichtstrahl 21e aufgespalten wird. Der aus dem ersten optisch doppelbrechenden Kristall 51 austretende erste ordentliche Strahl 21o und der außerordentliche Lichtstrahl 21e treffen auf den zweiten optischen Kristall 52 auf und werden in diesem in analoger Art und Weise in die beiden zweiten ordentlichen Lichtstrahlen 22o und 22o' sowie in die beiden zweiten außerordentlichen Lichtstrahlen 22e und 22e' aufgespalten. Die vier im zweiten optisch doppelbrechenden Kristall 52 erzeugten Lichtstrahlen 22o,22o', 22e und 22e' gelangen dann zum dritten optisch doppelbrechenden Kristall 53 des X-Strahlmultiplexers 5a und werden in vier dritte ordentliche Lichstrahlen 23o, 23o', 23o'',23o‴ sowie in vier dritte außerordentliche Lichtstrahlen 23e, 23e', 23e'', 23e‴ aufgespalten.

Dem Fachmann ist aus dieser Beschreibung der Funktionsweise des X-Strahlmultiplexers 5a klar ersichtlich, wie er durch eine Serienanordnung mehrerer entsprechend ausgerichteter optisch doppelbrechender Kristalle eine Aufspaltung eines auf den X-Strahlmultiplexer 5a auftretenden Lichtstrahls 20 in eine Vielzahl von parallelen Lichtstrahlen 20a-20h erreicht: Die Anzahl der aus dem X-Strahlmultiplexer 5a austretenden parallelen Lichtstrahlen 20a-20h beträgt 2^{x}, wobei x die Anzahl der im X-Strahlenmultiplexer 5a angeordneten optisch doppelbrechenden Kristalle bezeichnet. Die Anzahl der aus dem X-Multiplexer austretenden Lichtstrahlen 20a-20h bestimmt somit die Anzahl n der Speicherfelder 10aa-10ha einer Spalte der Speicherfeld-Matrix 10.

Um eine äquidistante Verteilung der parallelen Lichtstrahlen 20a-20h in der X-Richtung zu erreichen, ist es erforderlich, daß die Dicke d1,d2 und d3 der optisch doppelbrechenden Kristalle 51-53 derart aufeinander abgestimmt ist, daß die Dicke eines Kristalls - z.B. des zweiten Kristalls 52 - die Hälfte der Dicke des im Strahlengang des Lichtstrahles 20 durch den X-Strahlmultiplexer 5a vorangehenden Kristalls (hier: der erste Kristall 51) beträgt. In dem hier gezeigten Fall, in dem der auf den X-Strahlmultiplexer 5a einfallende Lichtstrahl 20 äquidistant in acht parallele Lichtstrahlen 20a-20h aufgespaltet wird, verhalten sich die Dicken d1,d2 und d3 des ersten, des zweiten und des dritten optisch doppelbrechenden Kristalls 51-53 gemäß dem Verhältnis 4:2:1.

Die aus dem X-Strahlmultiplexer 5a austretenden parallelen Lichtstrahlen 20a-20h werden zu dem vierten optisch doppelbrechenden Kristall 54 des Y-Strahlmultiplexers 5b geführt.

Im Y-Strahlmultiplexer 5b erfolgt eine Aufspaltung der auf diesen auftreffenden, bereits in der X-Richtung aufgefächerten parallelen Lichtstrahlen 20a-20h in der Y-Richtung. Die im Y-Strahlmultiplexer 5b stattfindende Strahlvervielfachung ist in Figur 4b dargestellt und ergibt sich für den Fachmann klar verständlich aus der oben beschriebenen Strahlvervielfachung im X-Strahlmultiplexer 5a. Eine eingehende Beschreibung der Strahlvervielfachung im Y-Strahlmultiplexer ist daher an dieser Stelle nicht mehr notwendig.

An der Ausgangsseite des Y-Strahlmultiplexers 5b, also an der Endfläche 56a des sechsten optisch doppelbrechenden Kristalls 56 treten dann 2^{x} x 2^{y} parallele Lichtstrahlen 20aa-20ah, 20ba-bh, ..., 20ha-20hh auf, wobei mit y die Anzahl der optisch doppelbrechenden Kristalle 54-56 des Y-Strahlmultiplexers 5b bezeichnet wird. Die Anzahl der in Y-Richtung aus dem Y-Strahlmultiplexer 5b austretenden Lichtstrahlen 20aa-20ah der Lichtstrahlen-Matrix 25 bestimmt somit die Anzahl m der Speicherfelder 10aa-10ah einer Zeile der Speicherfeld-Matrix 10 des optischen Speichermediums 1.

Eine wesentliche Anforderung, welche der Strahlmultiplexer 5 erfüllen muß, besteht darin, daß eine Winkelkorrelation zwischen dem Raumwinkel des auf den Strahlmultiplexer 5 einfallenden Lichtstrahls 20 und dem Raumwinkel der aus diesem austretenden, eine Lichtstrahl-Matrix 25 bildenden parallelen Lichtstrahlen 20aa-20hh gegeben ist. Durch diese Winkelkorrelation ist gewährleistet, daß eine bestimmte Ablenkung des Lichtstrahls 20 in der X/Y-Ablenkeinrichtung 3 in einer genau festlegbaren Ablenkung der parallelen Lichtstrahlen 20aa-20hh der Lichtstrahl-Matrix 25 resultiert, so daß durch eine entsprechende Ansteuerung der X/Y-Ablenkeinrichtung 3 mittels der Steuereinrichtung 4 ein wahlfreier Zugriff auf eine bestimmte Speicherstelle der Speicherstellen-Matrix 11 eines jeden Speicherfeldes 10aa-10hh der Speicherfeld-Matrix 10 des optischen Speichermediums 1 erreicht wird. Diese Anforderung erfüllt der oben beschriebene Strahlmultiplexer 5 in besonders vorteilhafter Weise.

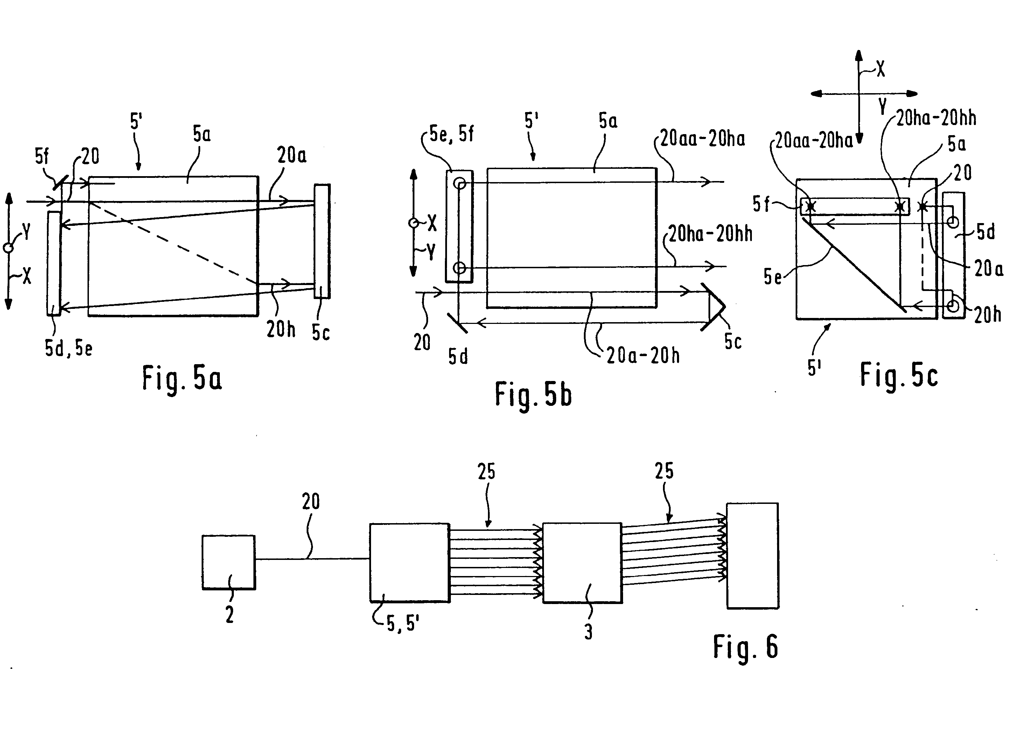

Eine alternative Ausführung des Strahlmultiplexers ist in den Figuren 5a-5c dargestellt. Diese zweite Ausführungsform 5' zeichnet sich in besonders vorteilhafter Art und Weise durch ihren stark vereinfachten Aufbau aus: Es ist nur ein X-Strahlmultiplexer 5a erforderlich. Der Y-Strahlmultiplexer 5b wird durch ein Umkehrprisma 5c und drei Spiegel 5d, 5e und 5f ersetzt.

Der Aufbau und die Funktionsweise des Strahlmultiplexers 5' ist aus den Figuren 5a-5c klar ersichtlich. Hierbei zeigt die Figur 5a eine Seitenansicht aus der Y-Richtung der Figur 1.

Die Figur 5b stellt eine Draufsicht auf den Strahlmultiplexer aus der X-Richtung der Figur 1 dar, und die Figur 5c zeigt den Strahlmultiplexer 5' aus der Sicht des auf ihn auftreffenden Lichtstrahls 20. Der Lichtstrahl 20 wird - wie oben analog beschrieben wurde - im X-Strahlmultiplexer 5a in eine Anzahl von in der X-Richtung aufgefächerten parallelen Lichtstrahlen 20a-20h aufgespaltet. Nach dem Austritt der parallelen Lichtstrahlen 20a-20h aus dem X-Strahlmultiplexer 5a werden diese Lichtstrahlen 20a-20h zu dem Umkehrprisma 5c geführt, welches die Lichtstrahlen 20a-20h von der Ausgangsseite des Strahlmultiplexers 5a zu dessen Eingangsseite zurückführt. An dieser Eingangsseite ist der erste Spiegel 5d derart schräggestellt angeordnet, daß die vom Umkehrprisma 5c umgeleiteten Lichtstrahlen 20a-20h eine Richtungsänderung erfahren, so daß sie im wesentlichen parallel zur Eingangsseite des X-Strahlmultiplexers 5a verlaufen. Der dem ersten Spiegel 5d im Strahlengang folgende zweite Spiegel 5e lenkt die vom ersten Spiegel 5d reflektierten Lichtstrahlen 20a-20h derart um, daß deren X-Auffächerung in eine Y-Auffächerung umgesetzt wird: Der dritte Spiegel 5f leitet die parallel zur Eingangsseite verlaufenden, vom zweiten Spiegel 5e reflektierten Lichtstrahlen derart, daß sie in Y-Richtung aufgefächert und parallel zum von der Lichtquelle 2 emittierten Lichtstrahl 20 in den X-Strahlmultiplexer 5a eintreten. Die Lichtstrahlen 20a-20h treffen folglich auf die Eingangsseite des Strahlmultiplexers 5a in Y-Richtung gegeneinander versetzt auf. Dies bewirkt, daß jeder einzelne der Lichtstrahlen 20a-20h wiederum in der X-Richtung aufgespaltet wird, so daß an der Ausgangsseite des Strahlmultiplexers 5a die durch die Lichtstrahlen 20aa-20hh gebildete Lichtstrahl-Matrix 25 austritt.

Eine derartige zweidimensionale Aufspaltung des Lichtstrahls 20 in die parallelen Lichtstrahlen 20aa-20hh der Lichtstrahl-Matrix 25 bewirkt in besonders vorteilhafter Art und Weise, daß ein bit-paralleler Zugriff auf jeweils eine Speicherstelle eines jeden Speicherfelds 10aa-10hh der Speicherfeld-Matrix 10 des optischen Speichermediums 1 erreicht wird. Es ist also besonders vorteilhaft möglich, gleichzeitig m x n (hier: 8 x 8) Bits in den entsprechenden Speicherstellen des optischen Speichermediums abzuspeichern bzw. zu lesen. Dieser bit-parallele Zugriff reduziert die zur Verarbeitung der entsprechenden Anzahl von Bits benötigte Verarbeitungszeit beträchtlich, wodurch eine besonders hohe Operationsgeschwindigkeit des optischen Speichers erreicht wird.

Das Lesen der auf dem optischen Speichermedium 1 angespeicherten Daten erfolgt in analoger Art und Weise wie das Schreiben, wobei - wie bereits eingangs angeführt - ein Lichtstrahl 20 mit geringerer Energie verwendet wird, so daß das optische Speichermedium 1 nicht über den Curie-Punkt erhitzt wird. Die von jeweils einer wahlfrei abgetasteten Speicherstelle 11aa-11hh eines jeden Speicherfeldes 10aa-10hh der Speicherfeld-Matrix 10 reflektierten Lichtstrahlen 22aa-22hh werden zu einer Detektor-Anordnung 6 geleitet, welche eine Vielzahl von in Matrixform angeordneten Detektoren 61aa-61hh aufweist. Die Anzahl der Detektoren 61aa-61hh entspricht dabei der Anzahl der vom Strahlmultiplexer 5 erzeugten, die Lichtstrahl-Matrix 25 bildenden parallelen Lichtstrahlen 20aa-20hh. Jeder der Detektoren 61aa-61hh der Detektor-Anordnung 6 ist genau einem der reflektierten Lichtstrahlen 22aa-22hh zugeordnet und registriert dessen Intensität, welche - wie eingangs bereits beschrieben wurde - die binäre Belegung der betreffenden Speicherstelle repräsentiert.

In der Figur 6 ist ein zweites Ausführungsbeispiel des optischen Speichers mit wahlfreiem Zugriff dargestellt. Dieses ist im wesentlichen mit dem oben beschriebenen Ausführungsbeispiel identisch, so daß gleiche Teile mit gleichen Bezugszeichen bezeichnet werden. Der wesentliche Unterschied zwischen diesen beiden Ausführungsbeispielen eines optischen Speichers besteht darin, daß beim zweiten Ausführungsbeispiel der Strahlmultiplexer 5 bzw. 5' der X/Y-Ablenkeinrichtung 3 vorgeschaltet ist. Der von der Lichtquelle 2 emittierte Lichtstrahl 20 wird also erst nach seiner Aufspaltung in die aus den parallelen Lichtstrahlen 20aa - 20hh bestehende Lichtstrahl-Matrix 25 zweidimensional abgelenkt. Dies hat zur Konsequenz, daß der Strahlmultiplexer 5,5' einfacher ausgeführt sein kann, da der auf ihn auftreffende Lichtstrahl 20 immer unter der gleichen Richtung einfällt: Es ist also nicht erforderlich, daß beim Strahlmultiplexer 5 bzw. 5' eine eindeutige Winkelkorrelation zwischen dem Einfalls-Raumwinkel des auftreffenden Lichtstrahls 20 und den Ausfalls-Raumwinkel der austretenden parallelen Lichtstrahlen 20aa-20hh der Lichtstrahl-Matrix 25 gegeben ist.

In besonders vorteilhafter Art und Weise kann daher ein aus m x n Glasfasern bestehendes Glasfaserbündel als Strahlmultiplexer eingesetzt werden, dessen Eingang mit dem von der Lichtquelle 2 emittierten Lichtstrahl 20 beaufschlagt wird. Die einzelnen Glasfasern des Glasfaserbündels werden dann räumlich derart angeordnet, daß an der Ausgangsseite des Glasfaserbündels m x n parallele Lichtstrahlen austreten, die voneinander jeweils einen gewissen räumlichen Abstand aufweisen. Die Lichtstrahlen der derart gebildeteten Lichtstrahlen-Matrix 25 werden dann der X/Y-Ablenkeinrichtung 3 zugeführt.

Die weitere Funktionsweise des zweiten Ausführungsbeispiels des optischen Speichers mit wahlfreiem Zugriff ist dem Fachmann aus der obigen Beschreibung des ersten Ausführungsbeispiels ersichtlich und braucht deshalb an dieser Stelle nicht mehr weiter erläutert werden.

Die beiden oben beschriebenen Ausführungsbeispiele des optischen Speichers gingen davon aus, daß die Lichtstrahlen 20aa-20ah der Lichtstrahl-Matrix 25 äquidistant und parallel zueinander verlaufen. Diese Annahme ist nicht unbedingt notwendig: Es ist vielmehr möglich, den Strahlmultiplexer derart auszubilden, daß die an seiner Ausgangsseite austretenden Lichtstrahlen 20aa-20hh der Lichtstrahl-Matrix 25 divergent verlaufen, d.h., die einzelnen Lichtstrahlen 20aa-20hh der Lichtstrahl-Matrix 25 bilden eine Lichtstrahl-Pyramide aus, deren Spitze zur Lichtquelle 2 gerichtet ist. Der eben beschriebene, ein aus m x n Glasfasern bestehendes Glasfaserbündel aufweisende Strahlmultiplexer ist zur Erzeugung eines derartigen Strahlenverlaufs besonders geeignet: Die einzelnen Glasfasern des Glasfaserbündels werden dann räumlich derart angeordnet und/oder an ihren Austrittsenden geschliffen, daß die austretenden Lichtstrahlen in ihrer Gesamtheit die oben erwähnte Lichtstrahlen-Pyramide bilden. In diesem Sinn soll in den folgenden Ansprüchen der Begriff "Lichtstrahlen der Lichtstrahl-Matrix 25" sowohl parallele als auch divergente, eine Lichtstrahl-Pyramide bildende Lichtstrahlen umfassen.

## Patentansprüche

1. Optischer Speicher mit wahlfreiem Zugriff, mit einem optischen Speichermedium (1), das eine Vielzahl von in Matrixform angeordneten Speicherfeldern (10aa-10hh) aufweist, wobei jedes Speicherfeld (10aa-10hh) dieser Speicherfeld-Matrix (10) eine Speicherstellen-Matrix (11) enthält, die aus einer Anzahl von in Matrixform angeordneten Speicherstellen (11aa-11hh) besteht, und mit einer X/Y-Ablenkeinrichtung (3) zur wahlfreien Adressierung einer Speicherstelle (11aa-11hh) eines Speicherfeldes (10aa-10hh) der Speicherfeld-Matrix (10), welche mit einem X-Steuersignal und mit einem Y-Steuersignal angesteuert wird, so daß ein auf die X/Y-Ablenkrichtung (3) auftreffender Lichtstrahl in Abhängigkeit von der durch die beiden Steuersignale bewirkten Positionierung der X/Y-Ablenkeinrichtung (3) wahlfrei auf eine dieser Positionierung korrespondierende Speicherstelle (11aa-11hh) eines Speicherfeldes (10aa-10hh) des optischen Speichermediums (1) geleitet wird, **dadurch gekennzeichnet**, daß zwischen der Lichtquelle (2) und der X/Y-Ablenkeinrichtung ein Strahlmultiplexer (5,5') angeordnet ist, welcher einen auftreffenden Lichtstrahl (20) in eine Anzahl von eine Lichtstrahl-Matrix (25) bildende Lichtstrahlen (20aa-20hh) derart auffächert, daß jeder Lichtstrahl (20aa-20hh) der Lichtstrahl-Matrix (25) einem Speicherfeld (10aa-10hh) der Speicherfeld-Matrix (10) des optischen Speichermediums (1) zugeordnet ist, und daß in Abhängigkeit von der Ansteuerung der X/Y-Ablenkeinrichtung (3) durch das X- und das Y-Steuersignal jeder Lichtstrahl (20aa-20hh) der Lichtstrahl-Matrix (25) auf die dieser Ansteuerung korrespondierende Speicherstelle (11aa-11hh) des ihm zugeordneten Speicherfeldes (10aa-10hh) der Speicherfeld-Matrix (10) auftrifft, so daß jeweils eine Speicherstelle (11aa-11hh) aller Speicherfelder (10aa-10hh) simultan durch den zugeordneten Lichtstrahl (20aa-20hh) der Lichtstrahl-Matrix (25) beaufschlagt wird.

2. Optischer Speicher nach Anspruch 1, dadurch gekennzeichnet, daß der Strahlmultiplexer (5) einen X-Strahlmultiplexer (5a) und einem Y-Strahlmultiplexer (5b) aufweist, und daß der X-Strahlmultiplexer (5a) den von der Lichtquelle (2) emittierten Lichtstrahl (20) in eine Anzahl von in einer X-Richtung aufgefächerte Lichtstrahlen (20a-20h) aufspaltet, und daß jeder aus dem X-Strahlmultiplexer (5a) austretende Lichtstrahl (20a-20h) in dem Y-Strahlmultiplexer (5b) in eine Anzahl von in einer Y-Richtung aufgefächerte weitere Lichtstrahlen (20aa-20hh) aufgespaltet wird, welche die Lichtstrahl-Matrix (25) bilden.

3. Optischer Speicher nach einem der Ansprüche 1 bis 2, dadurch gekennzeichnet, daß der Strahlmultiplexer (5,5') aus optisch doppelbrechenden Kristallen (51-56) besteht.

4. Optischer Speicher nach einem der Ansprüche 1 bis 3, dadurch gekennzeichnet, daß der X-Strahlmultiplexer (5a) aus mehreren in Serie angeordneten optisch doppelbrechenden Kristallen (51,52,53) besteht, die derart ausgerichtet sind, daß eine Auffächerung des Lichtstrahles (20) in der X-Richtung erfolgt, und/oder daß der Y-Strahlmultiplexer (5b) aus mehreren in Serie angeordneten optisch doppelbrechenden Kristallen (54,55,56) besteht, die derart angeordnet sind, daß eine Auffächerung der aus dem X-Strahlmultiplexer (50) austretenden Lichtstrahlen (20a-20h) in der Y-Richtung erfolgt.

5. Optischer Speicher nach Anspruch 4, dadurch gekennzeichnet, daß die optisch doppelbrechenden Kristalle (51-56) des X-Strahlmultiplexers (5a) und/oder des Y-Strahlmultiplexers (5b) aus Doppelspat bestehen.

6. Optischer Speicher nach einem der Ansprüche 1 bis 3, dadurch gekennzeichnet, daß der Strahlmultiplexer (5') einen X-Strahlmultiplexer (5a), ein an der Ausgangsseite des X-Strahlmultiplexers (5a) angeordnetes Umkehrprisma (5c) und an der Eingangsseite des X-Strahlmultiplexers (5,5') angeordnete Spiegel (5d,5e,5f) aufweist, und daß die aus dem X-Strahlmultiplexer (5a) austretenden, in der X-Richtung aufgefächerten Lichtstrahlen (20a-20h) über das Umkehrprisma (5c) dem ersten Spiegel (5d) zugeführt werden, und daß die vom ersten Spiegel (5d) reflektierten Lichtstrahlen (20a-20h) zu dem zweiten Spiegel (5e) geleitet werden, welcher die in der X-Richtung aufgefächerten Lichtstrahlen (20a-20h) derart umlenkt, daß diese in der Y-Richtung versetzt werden und anschließend auf den dritten Spiegel (5f) treffen, welcher sie in den X-Strahlmultiplexer (5a) einleitet, und daß die in den X-Strahlmultiplexer (5a) eintretenden, in Y-Richtung versetzten Lichstrahlen (20a-20h) in der X-Richtung aufgefächert werden und als weitere Lichtstrahlen (20aa-20hh) der Lichtstrahl-Matrix (25) an der Ausgangsseite des X-Strahlmultiplexers (5a) austreten.

7. Optischer Speicher nach Anspruch 1, dadurch gekennzeichnet, daß der Strahlmultiplexer durch ein aus einer Vielzahl von Glasfasern bestehendes Glasfaserbündel gebildet wird, dessen Eingang mit dem von der Lichtquelle (2) emittierten Lichtstrahl (20) beaufschlagt wird, und bei dem die einzelnen Glasfasern des Glasfaserbündels räumlich derart angeordnet und/oder ihre Austrittsenden derart geschliffen werden, daß an der Ausgangsseite des Glasfaserbündels die parallelen Lichtstrahlen (20aa-20hh) der Lichtstrahl-Matrix (25) austreten.

8. Optischer Speicher nach Anspruch 1, dadurch gekennzeichnet, daß der Strahlmultiplexer durch ein aus einer Vielzahl von Glasfasern bestehendes Glasfaserbündel gebildet wird, deren Eingang mit dem von der Lichtquelle (2) emittierten Lichtstrahl (20) beaufschlagt wird, und bei dem die einzelnen Glasfasern des Glasfaserbündels räumlich derart angeordnet und/oder ihre Austrittsenden derart geschliffen werden, daß an der Ausgangsseite des Glasfaserbündels die Lichtstrahlen (20aa-20hh) der Lichtstrahl-Matrix (25) in Form einer Pyramide austreten.

9. Optischer Speicher nach einem der Ansprüche 1 bis 8, dadurch gekennzeichnet, daß die X/Y-Ablenkeinrichtung (3) einen ersten (31) und einen zweiten Piezokristall (32) aufweist, die mit einer Verspiegelung (33,34) versehen sind, und daß der erste bzw. der zweite Piezokristall (31,32) mit einem von einer Steuereinrichtung (4) des optischen Speichers erzeugten X-Steuersignal (31a) bzw. Y-Steuersignal (32a) angesteuert wird.

10. Optischer Speicher nach Anspruch 9, dadurch gekennzeichnet, daß der erste und der zweite Piezokristall (31,32) starr verbunden sind.

11. Optischer Speicher nach einem der Ansprüche 1 bis 10, dadurch gekennzeichnet, daß das optische Speichermedium (1) als magnetooptisches Speichermedium ausgebildet ist.

12. Optischer Speicher nach einem der Ansprüche 1 bis 11, dadurch gekennzeichnet, daß die vom optischen Speichermedium (1) reflektierten Lichtstrahlen (22aa-22hh) zu einer Detektoranordnung (6) geleitet werden, die eine Vielzahl von in Matrixform angeordneten Detektoren (61aa-61hh) aufweist, wobei die Anzahl der Detektoren (61aa-61hh) der Detektoranordnung (6) gleich der Anzahl der aus dem Strahlmultiplexer (5,5') austretenden Lichtstrahlen (20aa-20hh) der Lichtstrahl-Matrix (25) ist, und daß in den Detektoren (61aa-61hh) eine Änderung der Lichtintensität der von den Speicherstellen (11aa-11hh) des optischen Speichermediums (1) reflektierten Lichtstrahlen (22aa-22hh) erfaßbar ist.

## Claims

1. Optical random access memory comprising an optical memory medium (1) which has a plurality of memory areas (10aa-10hh) arranged in matrix form, wherein each memory area (10aa-10hh) of said memory area matrix (10) has a memory location matrix (11) comprising a number of memory locations (11aa-11hh) arranged in matrix form, and an X/Y-deflection means (3) for random addressing of a memory location (11aa-11hh) of a memory area (10aa-10hh) of the memory area matrix (10), which is actuated with an X-control signal and a Y-control signal so that a light beam impinging on the X/Y-deflection means (3), in dependence on the positioning of the X/Y-deflection means (3) which is produced by the two control signals, is randomly directed on to a memory location (11aa-11hh), which corresponds to said positioning, of a memory area (10aa-10hh) of the optical memory medium (1), characterised in that disposed between the light source (2) and the X/Y-deflection means is a beam multiplexer (5, 5') which fans out an impinging light beam (20) into a number of light beams (20aa-20hh) which form a light beam matrix (25), that each light beam (20aa-20hh) of the light beam matrix (25) is associated with a memory area (10aa-10hh) of the memory area matrix (10) of the optical memory medium (1), and that, in dependence on the actuation of the X/Y-deflection means (3) by the X-control signal and the Y-control signal, each light beam (20aa-20hh) of the light beam matrix (25) impinges on the memory location (11aa-11hh), corresponding to said actuation, of the memory area (10aa-10hh), associated therewith, of the memory area matrix (10) so that a respective memory location (11aa-11hh) of all memory areas (10aa-10hh) is simultaneously acted upon by the associated light beam (20aa-20hh) of the light beam matrix (25).

2. An optical memory according to claim 1 characterised in that the beam multiplexer (5) has an X-beam multiplexer (5a) and a Y-beam multiplexer (5b), and that the X-beam multiplexer (5a) splits up the light beam (20) emitted by the light source (2) into a number of light beams (20a-20h) which are fanned out in an X-direction, and that each light beam (20a-20h) issuing from the X-beam multiplexer (5a) is split up in the Y-beam multiplexer (5b) into a number of further light beams (20aa-20hh) which are fanned out in a Y-direction and which form the light beam matrix (25).

3. An optical memory according to one of claims 1 and 2 characterised in that the beam multiplexer (5, 5') comprises optically birefringent crystals (51-56).

4. An optical memory according to one of claims 1 to 3 characterised in that the X-beam multiplexer (5a) comprises a plurality of optical birefringent crystals (51, 52, 53) which are arranged in series and which are so oriented that the light beam (20) is fanned out in the X-direction and/or that the Y-beam multiplexer (5b) comprises a plurality of optically birefringent crystals (54, 55, 56) which are arranged in series and which are so arranged that the light beams (20a-20h) issuing from the X-beam multiplexer (50) are fanned out in the Y-direction.

5. An optical memory according to claim 4 characterised in that the optically birefringent crystals (51-56) of the X-beam multiplexer (5a) and/or the Y-beam multiplexer (5b) comprise Iceland spar.

6. An optical memory according to one of claims 1 to 3 characterised in that the beam multiplexer (5') has an X-beam multiplexer (5a), a reversing prism (5c) arranged at the exit side of the X-beam multiplexer (5a), and mirrors (5d, 5e, 5f) arranged at the entry side of the X-beam multiplexer (5, 5'), and that the light beams (20a-20h) which issue from the X-beam multiplexer (5a) and which are fanned out in the X-direction are passed by way of the reversing prism (5c) to the first mirror (5d) and that the light beams (20a-20h) which are reflected by the first mirror (5d) are passed to the second mirror (5e) which diverts the light beams (20a-20h) which are fanned out in the X-direction, in such a way that they are displaced in the Y-direction and then impinge on the third mirror (5f) which directs them into the X-beam multiplexer (5a), and that the light beams (20a-20h) which pass into the X-beam multiplexer (5a) and which are displaced in the Y-direction are fanned out in the X-direction and issue as further light beams (20aa-20hh) of the light beam matrix (25) at the exit side of the X-beam multiplexer (5a).

7. An optical memory according to claim 1 characterised in that the beam multiplexer is formed by a glass fibre bundle which comprises a plurality of glass fibres and the entry of which receives the light beam (20) emitted by the light source (2), and in which the individual glass fibres of the glass fibre bundle are so arranged spatially and/or their exit ends are so ground that the parallel light beams (20aa-20hh) of the light beam matrix (25) issue at the exit side of the glass fibre bundle.

8. An optical memory according to claim 1 characterised in that the beam multiplexer is formed by a glass fibre bundle which comprises a plurality of glass fibres and the entry of which receives the light beam (20) emitted by the light source (2), and in which the individual glass fibres of the glass fibre bundle are so arranged spatially and/or their exit ends are so ground that the parallel light beams (20aa-20hh) of the light beam matrix (25) issue at the exit side of the glass fibre bundle in the form of a pyramid.

9. An optical memory according to one of claims 1 to 8 characterised in that the X/Y-deflection means (3) has a first piezoelectric crystal (31) and the second piezoelectric crystal (32) which are provided with a mirror coating (33, 34), and that the first and the second piezoelectric crystals (31, 32) are respectively actuated by an X-control signal (31a) and a Y-control signal (32a) produced by a control means (4) of the optical memory.

10. An optical memory according to claim 9 characterised in that the first and second piezoelectric crystals (31, 32) are rigidly connected.

11. An optical memory according to one of claims 1 to 10 characterised in that the optical memory medium (1) is in the form of a magneto-optical memory medium.

12. An optical memory according to one of claims 1 to 11 characterised in that the light beams (22aa-22hh) which are reflected by the optical memory medium (1) are passed to a detector arrangement (6) which has a plurality of detectors (61aa-61hh) arranged in matrix form, wherein the number of detectors (61aa-61hh) of the detector arrangement (6) is equal to the number of light beams (20aa-20hh) of the light beam matrix (25), which issue from the beam multiplexer (5, 5'), and that a change in the light intensity of the light beams (22aa-22hh) which are reflected by the memory locations (11aa-11hh) of the optical memory medium (1) can be detected in the detectors (61aa-61hh).

## Revendications

1. Mémoire optique à accès aléatoire, comprenant un milieu de mémoire optique (1), qui comporte une série de champs de mémoire (10aa à 10hh) disposés en forme de matrice, chaque champ de mémoire (10aa à 10hh) de cette matrice (10) de champs de mémoire contenant une matrice (11) d'emplacements de mémoire qui se compose d'un nombre d'emplacements de mémoire (11aa à 11hh) disposés en forme de matrice, et un dispositif de balayage X/Y (3) prévu pour l'adressage aléatoire d'un emplacement de mémoire (11aa à 11hh) d'un champ de mémoire (10aa à 10hh) de la matrice (10) de champs de mémoire, dispositif qui est commandé au moyen d'un signal de commande en X et d'un signal de commande en Y d'une manière telle qu'un rayon lumineux incident selon la direction de balayage X/Y (3) est guidé de façon aléatoire en fonction du positionnement, résultant des deux signaux de commande, du dispositif (3) de balayage X/Y à un emplacement de mémoire (11aa à 11hh), correspondant à ce positionnement, d'un champ de mémoire (10aa à 10hh) du milieu de mémoire optique (1), caractérisée en ce qu'il est disposé, entre la source lumineuse (2) et le dispositif de balayage X/Y, un multiplexeur de rayons (5, 5') qui répartit un rayon lumineux entrant (20) en un certain nombre de rayons lumineux (20aa à 20hh) constituant une matrice (25) de rayons lumineux d'une manière telle que chaque rayon lumineux (20aa à 20hh) de la matrice (25) de rayons lumineux est associé à un champ de mémoire (10aa à 10hh) de la matrice (10) de champs de mémoire du milieu de mémoire optique (1), et en ce que chaque rayon lumineux (20aa à 20hh) de la matrice (25) de rayons lumineux parvient, en fonction de la commande du dispositif (3) de balayage X/Y, par le signal de commande en X et le signal de commande en Y, à l'emplacement de mémoire (11aa à 11hh), correspondant à cette commande du champ de mémoire (10aa à 10hh) de la matrice (10) des champs de mémoire, qui lui est associé de sorte que respectivement un emplacement de mémoire (11aa à 11hh) de tous les champs de mémoire (10aa à 10hh) est frappé simultanément par le rayon lumineux associé (20aa à 20hh) de la matrice (25) de rayons lumineux.

2. Mémoire optique selon la revendication 1, caractérisée en ce que le multiplexeur (5) de rayons comporte un multiplexeur de rayons en X (5a) et un multiplexeur de rayons en Y (5b), et en ce que le multiplexeur de rayons en X (5a) divise le rayon lumineux (20) émis par la source lumineuse (2) en un certain nombre de rayons lumineux (20a à 20h) répartis dans une direction X, et en ce que chaque rayon lumineux (20a à 20h) sortant du multiplexeur de rayons en X (5a) est divisé dans le multiplexeur de rayons en Y (5b) en une série d'autres rayons lumineux (20aa à 20hh), répartis dans une direction Y, qui constituent la matrice (25) de rayons lumineux.

3. Mémoire optique selon l'une des revendications 1 ou 2, caractérisée en ce que le multiplexeur de rayons (5, 5') se compose de cristaux à biréfringence optique (51 à 56).

4. Mémoire optique selon l'une des revendications 1 à 3, caractérisée en ce que le multiplexeur de rayons en X (5a) se compose de plusieurs cristaux à biréfringence optique (51, 52, 53) disposés en série, qui sont orientés d'une manière telle qu'une répartition du rayon lumineux (20) s'effectue dans la direction X, et/ou que le multiplexeur de rayons en Y (5b) se compose de plusieurs cristaux à biréfringence optique (54, 55, 56) disposés en série, qui sont disposés d'une manière telle qu'une répartition des rayons lumineux (20a à 20h) sortant du multiplexeur (50) de rayons en X s'effectue dans la direction Y.

5. Mémoire optique selon la revendication 4, caractérisée en ce que les cristaux à biréfringence optique (51 à 56) du multiplexeur de rayons en X (5a) et/ou du multiplexeur de rayons en Y (5b) sont en spath d'Islande.

6. Mémoire optique selon l'une des revendications 1 à 3, caractérisée en ce que le multiplexeur de rayons (5') comporte un multiplexeur de rayons en X (5a), un prisme à redressement d'image (5c) disposé sur le côté de sortie du multiplexeur de rayons en X (5a), et des miroirs (5d, 5e, 5f) disposés sur le côté d'entrée du multiplexeur (5, 5') de rayons en X, et en ce que les rayons lumineux (20a à 20h) sortant du multiplexeur (5a) de rayons en X, répartis dans la direction X, sont amenés par le prisme à redressement d'image (5c) au premier miroir (5d), en ce que les rayons lumineux (20a à 20h) réfléchis par le premier miroir (5d) sont conduits vers le deuxième miroir (5e) qui dévie les rayons lumineux (20a à 20h) répartis dans la direction X d'une manière telle que ceux-ci sont décalés dans la direction Y et parviennent ensuite au troisième miroir (5f), qui les introduit dans le multiplexeur (5a) de rayons en X, et en ce que les rayons lumineux (20a à 20h) décalés en direction Y entrant dans le multiplexeur (5a) de rayons en X sont répartis dans la direction X et sortent, sur le côté de sortie du multiplexeur (5a) de rayons en X, sous forme d'autres rayons lumineux (20aa à 20hh) de la matrice (25) de rayons lumineux.

7. Mémoire optique selon la revendication 1, caractérisée en ce que le multiplexeur de rayons est constitué par une série de fibres de verre formant un faisceau de fibres de verre dont l'entrée est frappée par le rayon lumineux (20) émis par la source lumineuse (2), et dans lequel les fibres de verre individuelles du faisceau de fibres de verre sont disposées dans l'espace d'une manière telle, et/ou leurs extrémités de sortie sont rectifiées d'une manière telle que les rayons lumineux parallèles (20aa à 20hh) de la matrice (25) de rayons lumineux sortent sur le côté de sortie du faisceau de fibres de verre.

8. Mémoire optique selon la revendication 1, caractérisée en ce que le multiplexeur de rayons est constitué par une série de fibres de verre formant un faisceau de fibres de verre dont l'entrée est frappée par le rayon lumineux (20) émis par la source lumineuse (2), et dans lequel les fibres de verre individuelles du faisceau de fibres de verre sont disposées dans l'espace d'une manière telle, et/ou leurs extrémités de sortie sont rectifiées d'une manière telle que les rayons lumineux (20aa à 20hh) de la matrice (25) de rayons lumineux sortent sur le côté de sortie du faisceau de fibres de verre sous une forme de pyramide.

9. Mémoire optique selon l'une des revendications 1 à 8, caractérisée en ce que le dispositif de balayage en X/Y (3) comporte un premier (31) et un deuxième (32) cristaux piézoélectriques, qui sont pourvus d'une couche réfléchissante (33, 34), et en ce que le premier ou le deuxième cristal piézoélectrique (31, 32) est commandé par un signal de commande en X (31a) ou un signal de commande en Y (32a) engendré par un dispositif de commande (4) de la mémoire optique.

10. Mémoire optique selon la revendication 9, caractérisée en ce que le premier et le deuxième cristaux piézoélectriques (31, 32) sont reliés de façon rigide.

11. Mémoire optique selon l'une des revendications 1 à 10, caractérisée en ce que le milieu de mémoire optique (1) est réalisé sous forme d'un milieu de mémoire magnéto-optique.

12. Mémoire optique selon l'une des revendications 1 à 11, caractérisée en ce que les rayons lumineux (22aa à 22hh) réfléchis par le milieu de mémoire optique (1) sont conduits vers un dispositif détecteur (6) qui comporte une série de détecteurs (61aa à 61hh) disposés en forme de matrice, le nombre des détecteurs (61aa à 61hh) du dispositif détecteur (6) étant égal au nombre des rayons lumineux (20aa à 20hh) de la matrice (25) de rayons lumineux sortant du multiplexeur de rayons (5, 5'), et en ce qu'une modification de l'intensité lumineuse des rayons lumineux (22aa à 22hh) réfléchis par les emplacements de mémoire (11aa à 11hh) du milieu de mémoire optique peut être captée dans les détecteurs (61aa à 61hh).
